# EUROPEAN PATENT APPLICATION

(11) **EP 1 674 828 A2**
(43) Date of publication of application: **28.06.2006**
(21) Application number: 05026099.1
(22) Date of filing: 30.11.2005
(51) Int. Cl.: G01C 21/36

(54) **Providing navigation information based on a navigation state**

(30) Priority: 09.12.2004 KR 2004103618
(71) Applicant: LG Electronics Inc., Yongdungpo-gu Seoul (KR)
(72) Inventor: Hong, Sang-Ki, Gyeonggi-Do (KR)
(74) Representative: Thum, Bernhard

(57) **Abstract**

A navigation system comprising a positioning system for determining a relative geographic location of an object; a controller for using location information provided by the positioning system in relation to designated destination information to determine a navigation state; and an indicator activated based on the navigation state to provide an instructional message suggesting a course of action to be taken and to provide a signal to automatically control an illumination system in conjunction with the instructional message, the illumination system visually signaling a navigation direction, wherein the illumination system is physically independent from any display unit of the navigation system.

## Description

### BACKGROUND OF THE INVENTION

### 1. Field of the Invention

The present invention relates to a navigation system, and more particularly to a navigation system for providing a direction indicator signal useful for controlling the operation of a vehicle.

### 2. Description of the Background Art

Global Positioning System (GPS) is a satellite-based radio navigation system communicating with a number of satellites for tracking locations on earth by triangulation of signals received from the satellites. In this way, a receiving GPS unit can pinpoint its location. Advantageously, the GPS covers the entire world and can be used wherever a satellite signal is received. No cost is associated with the reception of the GPS satellite signal.

The GPS is used most commonly in a navigation system that provides operational information to drivers of vehicles. Typically, the navigation system is mounted near a driver's seat in a vehicle to provide the driver with pertinent road information related to the current location of the vehicle and a destination. After the driver inputs the destination, some GPS systems find the shortest route or the optimum route to the destination. Then, the navigation system guides the driver on his route using voice commands such as "turn right ten meters ahead," or "turn left at the next intersection."

The currently implemented voice commands are useful to the driver who wishes to be notified of the direction of travel in advance. Unfortunately, however, the present GPS systems are limited to provide navigation instructions to the extent indicated above.

A system and method is needed to further enhance the related art devices.

### SUMMARY OF THE INVENTION

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, a navigation system for use in a vehicle to control an operational component of the vehicle comprises a navigation unit for determining location of the vehicle in a geographic area; and a control unit for receiving a signal from the navigation unit for determining a navigation state of the vehicle, wherein the control unit generates an operational signal for controlling an operation of the vehicle based on the navigation state.

In accordance with a preferred embodiment, the navigation system comprising: an input unit for receiving data about a designated destination; a navigation unit for determining location of the navigation system in a geographic area; and a control unit for receiving a signal from the navigation unit for determining a navigation state, determining a navigation state, wherein the control unit generates a control signal based on the navigation state to activate an illumination system positioned on an external surface of a housing physically independent from any display unit of the navigation system, such that the activation of the illumination system provides navigation information toward the designated destination.

The navigation state provides information on negotiating a turn in order to reach the designated destination. The illumination system comprises first and second illumination units, and wherein illumination intensity of each illumination unit is controlled based on the navigation state. The first illumination unit is positioned on a right side of the housing and the second illumination unit is positioned on the left side of the housing.

In another embodiment, the first illumination unit is activated when the navigation state indicates that a right turn is to be negotiated in order to reach the designated destination. The second illumination unit is activated when the navigation state indicates that a left turn is to be negotiated in order to reach the designated destination.

In an exemplary embodiment, the illumination system comprises at least one illumination unit, wherein color of the at least one illumination unit is controlled based on the navigation state. The illumination unit illuminates in a first color, when the navigation state indicates that a right turn is to be negotiated in order to reach the designated destination. The illumination unit illuminates in a second color, when the navigation state indicates that a left turn is to be negotiated in order to reach the designated destination.

The illuminating unit may be a light emitting diode (LED), for example. In one embodiment, the illuminating system is incorporated onto a body of a mobile communication terminal in communication with the navigation unit.

In accordance with another preferred embodiment, the navigation system comprises a positioning system for determining a relative geographic location of an object; a controller for using location information provided by the positioning system in relation to designated destination information to determine a navigation state; and an indicator activated based on the navigation state to provide an instructional message suggesting a course of action to be taken and to provide a signal to automatically control an illumination system in conjunction with the instructional message, the illumination system visually signaling a navigation direction, wherein the illumination system is physically independent from any display unit of the navigation system.

The illumination system comprises a first illumination unit associated with a left turn signal and a second illumination unit associated with a right turn signal. The indicator is an audio/visual mechanism for producing audio instructions and controlling a logic state of the illumination system. The first and second illumination units are first and second LEDs included in a mobile device. In one embodiment, the first and second illumination units are associated with first and second keys on a keypad of the mobile device.

In accordance with one aspect, a first color generated by the illumination system indicates a first navigation state; a second color generated by the illumination system indicates a second navigation state. The illumination system visually signals a navigation state by controlling illumination intensity of an illumination unit, or by controlling illumination sequence of an illumination unit.

For example, a first illumination sequence indicates approaching a navigation state within a first threshold and a second illumination sequence indicates approaching the navigation state with a second threshold. The navigation state is a turn state and the first and second thresholds respectively define first and second distances to a point of turning. The navigation state is a turn state and the first and second thresholds respectively define first and second lengths of time before reaching the point of turning.

The foregoing and other objects, features, aspects and advantages of the present invention will become more apparent from the following detailed description of the present invention when taken in conjunction with the accompanying drawings. The invention is not limited to any particular embodiments disclosed here.

### BRIEF DESCRIPTION OF THE DRAWINGS

The accompanying drawings, which are included to provide a further understanding of the invention and are incorporated in and constitute a unit of this specification, illustrate embodiments of the invention and together with the description serve to explain the principles of the invention.

Figures 1 and 2 are block diagrams that illustrate the internal components of a navigation system in accordance with first and second exemplary embodiments.

Figure 3 is a perspective view, which illustrates a mobile terminal incorporating the navigation system of Figures 1 or 2, in accordance with another embodiment.

Figure 4 is a flow chart illustrating an operational method and process for the navigation system, in accordance with yet another embodiment.

Figure 5 is an exemplary image rendered on a display unit of the navigation system, illustrating the relative geographic locations of a vehicle with respect to a destination in association with different navigation states.

Features, elements and aspects of the invention that are referenced by the same numerals in different figures represent the same, equivalent, or similar features, elements, or aspects in accordance with one or more embodiments of the system.

### DETAILED DESCRIPTION OF THE PREFERRED EMBODIMENTS

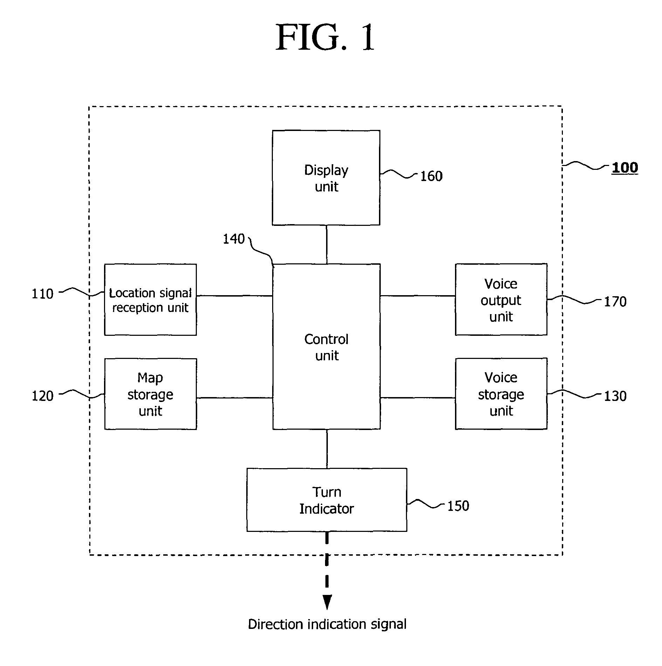

Referring to Figure 1, the navigation system 100, in accordance with one embodiment, comprises a reception unit 110, a storage unit 120, a voice storage unit 130, a control unit 140, a turn indicator 150, a display unit 160 and a voice output unit 170. It should be noted that the system configurations illustrated in Figures 1-5 are described here are by way of example and each configuration may be implemented in form of hardware, software, or any combination thereof.

Depending on implementation, other exemplary embodiments, system architectures and platforms that can support various aspects of the invention may be utilized without departing from the essential characteristics described herein. For example, while each unit is described in terms of specific logical or functional relationships, one skilled in the art will appreciate that such may be implemented in a variety of ways, such as appropriately configured and programmed processors, ASICs (application specific integrated circuits), and DSPs (digital signal processors).

Referring back to Figure 1, the reception unit 110 is configured for receiving a location signal such as a GPS signal. The storage unit 120 is configured for storing an electronic map. The a voice storage unit 130 is for storing instructional or informative messages including operation-related information such as road information and circumstance information or a message instructing a user to control his/her vehicle in a certain manner.

The control unit 140 determines the current location of the navigation system 100 and a location corresponding to a designated destination based on a location signal received by the reception unit 110. When the user inputs a desired destination, the control unit 140 processes available data to determine the shortest or the most optimum route between the destination and the current location as determined by the navigation system 100.

In one embodiment, the control unit 140 outputs a control signal corresponding to an operational circumstance to each unit. A turn indicator 150 provides a direction indication signal upon receiving a control signal of the control unit 140. The display unit 160 displays a navigation map upon receiving the control signal of the control unit 140.

In a preferred embodiment, the display unit displays the current location of the navigation system 100 and related information on the map. The voice output unit 170 outputs a suitable voice message for a navigation state, based on the control signal generated by the control unit 140. The voice message is selected from among a number of pre-recorded voice messages stored in the voice storage unit 130.

The reception unit 110 comprises a location signal-receiving antenna such as a GPS antenna. The reception unit 110 processes the location signal (e.g., GPS signal) received to determine the current location of the navigation system 100, and as a result the current location of a mobile terminal having the navigation system 110, or a vehicle in which the mobile terminal is located.

In one embodiment, the storage unit 120 stores an electronic navigation map as data in addition to detailed information on each road such as speed limit or a section where an accident rate is high, and continuously updates the related map information through wireless communication with a server system.

The voice storage unit 130 stores instructional audio recordings for controlling the operation of the vehicle according to predetermined navigation states. For example, the voice storage unit 130 may store previously recorded voice instructions to inform a user by announcing the following: 'Accident ahead,' 'Reduce speed to 60km or less,' 'Turn left twenty meters ahead,' 'Detour,' 'Traffic is heavy' and 'Caution! Accidents occur frequently in this area.'

In accordance with one aspect of the system, the control unit 140 receives from the reception unit 110, the location data providing the current location of the vehicle and location data identifying the destination inputted by the user. Based on the information stored in the storage unit 120, the control unit 140 controls the display unit to display a current location, a peripheral road, a moving path and the like.

The control unit 140 controls the voice output unit 170 to output a voice instruction suitable for an operational circumstance or a navigation state. An operational circumstance or a navigation state is determined based on the location of the vehicle in a predetermined route toward a destination, which may require the driver of the vehicle to take a specific action in order to maintain an appropriate driving course for the vehicle toward the designated destination.

For example, a turn state is recognized when the vehicle should make a turn. The control unit 140 controls the voice output unit 170 to output a voice message, and controls the turn indicator 150 to output a direction indication signal. The turn indicator 150 controls a direction indication illumination unit (i.e., a turn signal) of the vehicle according to the turn state.

The turn indicator 150 outputs a direction indication signal wirelessly or by wire upon receiving a control signal from the control unit 140 so as to switch to a first logic level (e.g., turn ON) a direction indication lamp (e.g., an LED of a mobile terminal, a left blinker, a right blinker, or other illumination unit). For example, when a left turn state is detected, a left blinker of the system is activated, and when a right turn state is detected, the right blinker is activated.

In a preferred embodiment, the display unit 160 receives a control signal from the control unit 140 to display a map of an area where a vehicle is currently located and operational information such as the current location of the vehicle on the map, the current speed, the distance to a road segment and the like. The voice output unit 170 receives a control signal from the control unit 140 to output a voice message suitable for an operational circumstance or navigation state. The voice data may be stored in the voice storage unit 130 and reproduced through a speaker, an ear set or the like.

The storage unit 120 and the voice storage unit 130 may be included in one or more memory units, and the turn indicator 150 may be included in the control unit 140, in accordance with an exemplary embodiment.

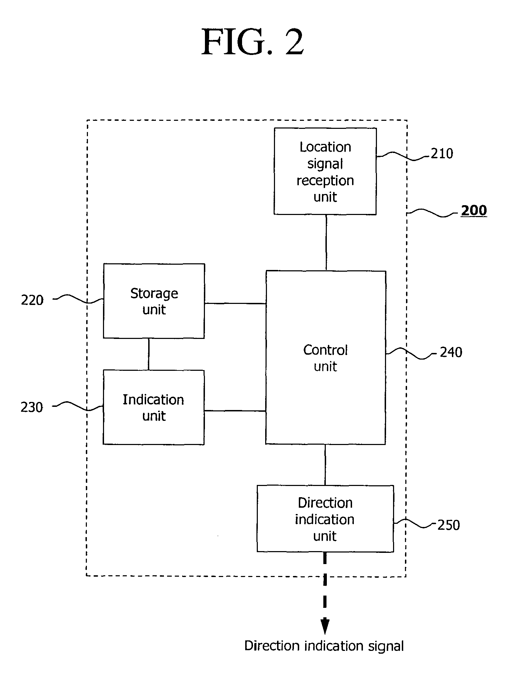

Figure 2 illustrates another exemplary embodiment, wherein one or more illumination units are controlled based on a detected navigation state. As shown, the mobile terminal 200 comprises a location signal reception unit 210 for receiving a location signal, a storage unit 220 for storing a map (e.g., a navigation or street map), an indication unit 230 for indicating a path to a destination, a control unit 240 for controlling the operation of a direction indication unit 250, and a direction indication unit 250 for outputting a signal for providing navigational instructions and operations.

The direction indication unit 250 may be an illumination unit such as a LED or a flat panel display of a mobile communication terminal, for example. The system may comprise one or more direction indication units 250. In one embodiment, a single direction indication unit 250 indicates a navigation direction (i.e., turn state) by way of causing the illumination unit to display a first or second color. For example, the color blue may indicate a right turn state, while the color orange may indicate a left turn state.

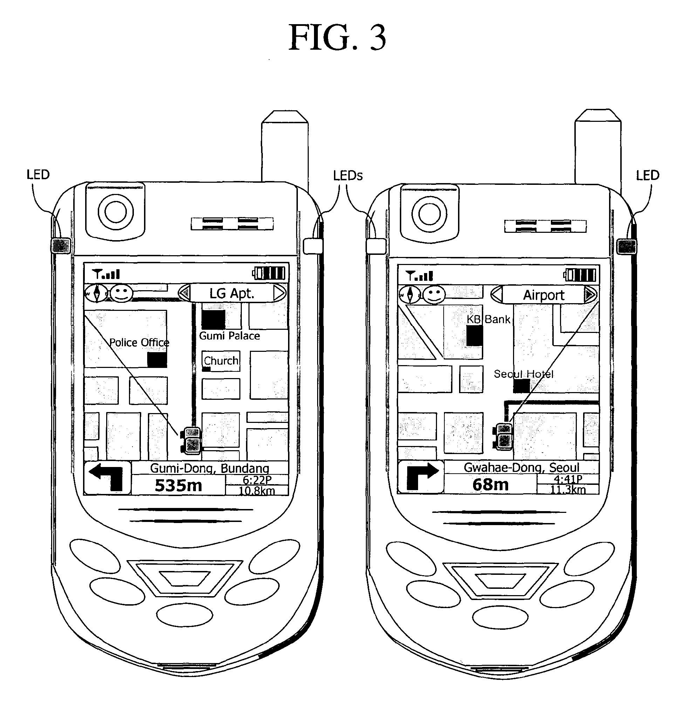

Figure 3 illustrates a perspective view of the external features of an embodiment of the invention, incorporating the components of the system of Figures 1 or 2. In this embodiment, the control unit preferably generates a control signal based on a detected the navigation state to activate an illumination system positioned on an external surface of a housing physically independent from any display unit of the navigation system, such that the activation of the illumination system provides navigation information toward the designated destination. As shown, the illumination system comprises first and second LEDs positioned on the top right and left corners of the system, respectively.

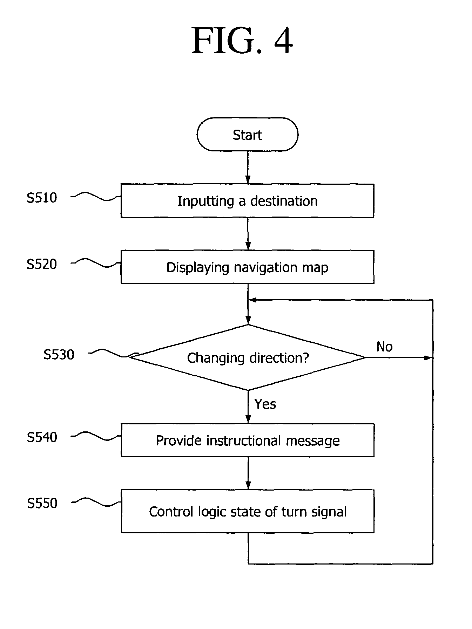

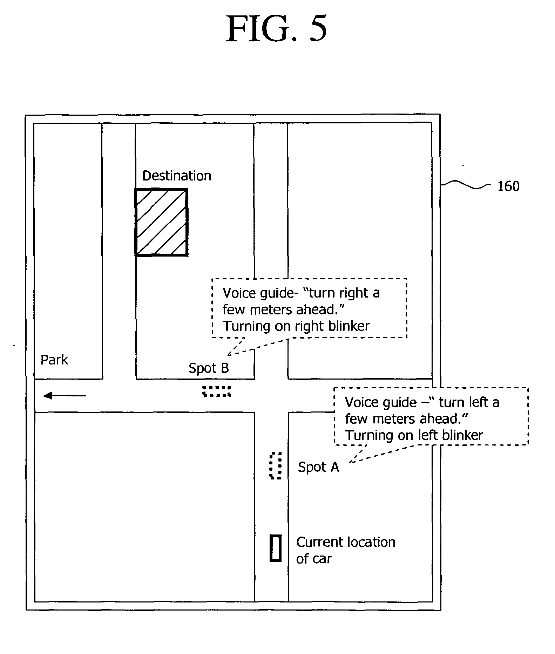

Figure 4 is a flow diagram illustrating a navigation and control method in accordance with one embodiment. Figure 5 is an exemplary image rendered on a display unit of the navigation system, illustrating the relative geographic locations of a vehicle with respect to a destination in association with different navigation states.

Referring to Figures 4 and 5, when a user sets a destination (S510), the navigation system displays a navigation map of the relative surrounding area and informative, instructional or operational information such as the current location of the vehicle, the destination and the like on the display unit (S520). The navigation system then determines a navigation state.

The navigation state provides information on whether the vehicle is to change direction, e.g., make a turn such as a left turn, a right turn, a U-turn or a P-turn (S530). If the navigation state requires the vehicle to make a turn, an instructional message is provided to instruct the driver to make a turn (S540).

In one embodiment, a direction indication signal is outputted independent or at the same time as the instructional message. The direction signal indicator may be configured to control a logic state of a turn signal (e.g., activate or deactivate a direction indicating lamp or blinker) in accordance with a detected navigation state of the vehicle (S550).

For example, as shown in Figure 5, when a user sets a destination like 'XX hotel' to be detected by the navigation system, a current location of the vehicle and the destination are displayed on the display unit. When the car reaches Spot A, the navigation system provides the driver with a voice message, such as, 'turn left a few meters ahead' and outputs a direction indication signal to thereby activate a left blinker.

When the car reaches Spot B, the navigation system provides the driver with a voice message, such as, 'turn right a few meters ahead' and outputs a direction indication signal to thereby activate a right blinker, for example.

A location at which a voice message is provided, the sequence and speed of blinking and other functional features of the system may be controlled, as the vehicle is approaching Spot A or Spot B and according to speed of a vehicle, traffic conditions or the like, depending on implementation.

For example, in one embodiment, the navigation system is configured to cause the blinkers blink faster as the vehicle approaches a turn. In another exemplary embodiment, the navigation system is configured to cause the blinkers change their illumination intensity from low to high, or high to low, as the vehicle approaches a turn. In another embodiment, the navigation system automatically deactivates the blinkers once the turn is negotiated.

In alternative embodiments, the navigation system may be embedded in a mobile communication terminal. In such embodiment, the blinkers may not be independent illumination units, but the left and right illumination units may be incorporated into the keypad of the mobile terminal (e.g., key #1 to indicate left, key #3 to indicate right) or other illumination units of the terminal, such as LED units utilized to provide the signal reception state of the mobile terminal (e.g., Bluetooth / Signal status indicator LEDs).

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A navigation system comprising:
an input unit for receiving data about a designated destination;
a navigation unit for determining location of the navigation system in a geographic area; and
a control unit for receiving a signal from the navigation unit for determining a navigation state,
wherein the control unit generates a control signal based on the navigation state to activate an illumination system positioned on an external surface of a housing physically independent from any display unit of the navigation system, such that the activation of the illumination system provides navigation information toward the designated destination.

2. The navigation system of claim 1, wherein the navigation state provides information on negotiating a turn in order to reach the designated destination.

3. The navigation system of claim 2, wherein the illumination system comprises first and second illumination units, and wherein illumination intensity of each illumination unit is controlled based on the navigation state.

4. The navigation system of claim 3, wherein the first illumination unit is positioned on a right side of the housing and the second illumination unit is positioned on the left side of the housing.

5. The navigation system of claim 4, wherein the first illumination unit is activated when the navigation state indicates that a right turn is to be negotiated in order to reach the designated destination.

6. The navigation system of claim 4, wherein the second illumination unit is activated when the navigation state indicates that a left turn is to be negotiated in order to reach the designated destination.

7. The navigation system of claim 2, wherein the illumination system comprises at least one illumination unit, wherein color of the at least one illumination unit is controlled based on the navigation state.

8. The navigation system of claim 7, wherein the illumination unit illuminates in a first color, when the navigation state indicates that a right turn is to be negotiated in order to reach the designated destination.

9. The navigation system of claim 7, wherein the illumination unit illuminates in a second color, when the navigation state indicates that a left turn is to be negotiated in order to reach the designated destination.

10. The navigation system of claim 7, wherein the illuminating unit is a light emitting diode (LED).

11. The navigation system of claim 7, wherein the illuminating system is incorporated onto a body of a mobile communication terminal in communication with the navigation unit.

12. The navigation system of claim 7, wherein the navigation system is incorporated into a mobile communication terminal.

13. A navigation system comprising:
a positioning system for determining a relative geographic location of an object;
a controller for using location information provided by the positioning system in relation to designated destination information to determine a navigation state; and
an indicator activated based on the navigation state to provide an instructional message suggesting a course of action to be taken and to provide a signal to automatically control an illumination system in conjunction with the instructional message, the illumination system visually signaling a navigation direction,
wherein the illumination system is physically independent from any display unit of the navigation system.

14. The navigation system of claim 13, wherein the illumination system comprises a first illumination unit associated with a left turn signal and a second illumination unit associated with a right turn signal.

15. The navigation system of claim 13, wherein the indicator is an audio/visual mechanism for producing audio instructions and controlling a logic state of the illumination system.

16. The navigation system of claim 14, wherein first and second illumination units are first and second LEDs included in a mobile device.

17. The navigation system of claim 16, wherein the first and second illumination units are associated with first and second keys on a keypad of the mobile device.

18. The navigation system of claim 13, wherein a first color generated by the illumination system indicates a first navigation state.

19. The navigation system of claim 13, wherein a second color generated by the illumination system indicates a second navigation state.

20. The navigation system of claim 13, wherein the illumination system visually signals a navigation state by controlling illumination intensity of an illumination unit.

21. The navigation system of claim 13, wherein the illumination system visually signals a navigation state by controlling illumination sequence of an illumination unit.

22. The navigation system of claim 13, wherein a first illumination sequence indicates approaching a navigation state within a first threshold and a second illumination sequence indicates approaching the navigation state with a second threshold.

23. The navigation system of claim 22, wherein the navigation state is a turn state and the first and second thresholds respectively define first and second distances to a point of turning.

24. The navigation system of claim 22, wherein the navigation state is a turn state and the first and second thresholds respectively define first and second lengths of time before reaching the point of turning.
